# EUROPÄISCHE PATENTSCHRIFT

(11) **EP 2 986 486 B1**
(45) Veröffentlichungstag und Bekanntmachung des Hinweises auf die Patenterteilung: **31.05.2017**
(21) Anmeldenummer: 14708297.8
(22) Anmeldetag: 07.03.2014
(51) Int. Cl.: B62D 21/15, B62D 25/20, B60K 1/04

(54) **BATTERIEANORDNUNG IN EINEM ZWEISPURIGEN FAHRZEUG**
BATTERY ARRANGEMENT IN A TWO-TRACK VEHICLE
AGENCEMENT DE BATTERIE DANS UN VÉHICULE À DEUX LIGNES DE ROUES

(30) Priorität: 18.04.2013 DE 102013006702
(43) Veröffentlichungstag der Anmeldung: 24.02.2016
(73) Patentinhaber: Volkswagen Aktiengesellschaft, 38440 Wolfsburg (DE)
(72) Erfinder: HENTRICH, Manuel, 49201 Dissen (DE); MALKE, Uwen, 38527 Meine (DE); JÄSCHKE, Dirk, 38446 Wolfsburg (DE); GÖDECKE, Ralf, 29386 Hankensbüttel (DE)
(86) Internationale Anmeldenummer: PCT/EP2014/054455
(87) Internationale Veröffentlichungsnummer: WO 2014/170064

(56) Entgegenhaltungen:
- DE-A1-102010 050 826
- DE-A1-102011 102 412
- DE-A1-102011 119 540
- DE-B3-102012 010 897
- FR-A1- 2 957 888

## Beschreibung

Die Erfindung betrifft eine Batterieanordnung für ein zweispuriges Fahrzeug nach dem Oberbegriff des Patentanspruches 1, ein Fahrzeug mit einer solchen Batterieanordnung nach dem Patentanspruch 9 sowie ein Verfahren zur Montage eines solchen Fahrzeuges nach dem Patentanspruch 10.

Die Traktionsbatterie eines Elektrofahrzeuges weist ein weitgehend bauteilsteif ausgebildetes Batteriegehäuse mit darin angeordneten crashsensiblen Batteriezellen auf. Diese müssen im Seitencrashfall aus Sicherheitsgründen weitgehend deformationsfrei verbleiben. Ein für den Seitencrash bauteilsteif ausgebildetes Batteriegehäuse ist aus der DE 10 2011 119 540 A1 bekannt. Das Batteriegehäuse ist im Seitencrashfall verlagerbar ausgebildet, wobei Querstreben die unfallinduzierte Seitenkraft aufnehmen und auf die gegenüberliegende Fahrzeugseite weiterleiten. Aus der DE 10 2010 050 826 A1 sind Schutzvorrichtungen in Form von Deformationselementen bekannt, die seitlich neben dem Batteriekasten angeordnet sind, um den Batteriekasten bei einem Seitencrash zu schützen. Weiterhin beschreibt die DE 10 2012 010 897 B3 einen Batteriekasten, der in das Fahrwerk eines Fahrzeugs integriert ist und einen Ober- und Untergurt umfasst. Die DE 10 2011 102 412 A1 beschreibt eine für einen Heckcrash optimierte Konstruktion, bei der ein Deformations-Querträger zur Aufnahme von Aufprallkräften um einen freien Deformationsweg verlagerbar ist. Weiterhin beschreibt die FR 2 957 888 A1 ein Fahrzeug mit einem im Unterboden angeordneten Batteriegehäuse in das ein Querträger integriert ist. Der Querträger ist zwischen Fahrzeuglängsträgern angeordnet und überspannt die eigentlichen Batterien, um diese bei einem Seitencrash zu schützen. Weiterhin sind seitlich am Batteriegehäuse Deformationselemente angeordnet.

Aus der DE 10 2009 035 492 A1 ist eine gattungsgemäße Batterieanordnung bekannt. Diese weist ein Batteriegehäuse mit innenseitig in der Fahrzeugquerrichtung verlaufenden Crashquerträger auf. Bei einem Seitencrash kann somit das Batteriegehäuse weitgehend deformationsfrei verbleiben, da der Crashquerträger einen Kraftpfad bereitstellt, mit dem die eingeleitete Aufprallenergie auf die crashabgewandte Fahrzeugseite weitergeleitet wird und dort abgebaut werden kann. Auf diese Weise wird unter Überbrückung der Batteriezellen die Aufprallenergie zur crashabgewandten Fahrzeugseite geführt.

Bei der Realisierung des oben genannten Kraftpfades besteht die Problematik, dass der Crashquerträger nicht Bestandteil des Fahrzeugaufbaus ist, sondern vielmehr integraler Bestandteil des Batteriegehäuses. Bei montierter Traktionsbatterie ist einerseits eine einwandfreie Kraftüberleitung von dem batterieseitigen Crashquerträger in den fahrzeugaufbauseitigen Türschweller oder Längsträger zu gewährleisten. Andererseits ist auch eine einfache Montage der Traktionsbatterie im Fahrzeugaufbau zu gewährleisten, und zwar ohne zusätzlichem Fertigungsaufwand zur Anbindung des Crashquerträgers am Fahrzeugaufbau.

Die Aufgabe der Erfindung besteht darin, eine Batterieanordnung in einem Fahrzeug bereitzustellen, bei der im Seitencrashfall eine ausreichend große Energieabsorptionsfähigkeit gewährleistet ist.

Die Aufgabe ist durch die Merkmale des Patentanspruches 1, des Patentansprüche 9 oder des Patentanspruches 10 gelöst. Bevorzugte Weiterbildungen der Erfindung sind in den Unteransprüchen offenbart.

Die Erfindung beruht auf dem Grundgedanken, dass eine einteilige Ausführung des batterieseitigen Crashquerträgers sowie eine unmittelbare Anbindung des Crashquerträgers an den seitlichen Längsträgern oder Türschwellern aus fertigungstechnischen Gründen nur mit hohem Montageaufwand ermöglicht ist. Vor diesem Hintergrund ist der Crashquerträger gemäß dem kennzeichnenden Teil des Patentanspruches 1 zumindest zweiteilig mit einem batterieintegrierten Mittelteil ausgebildet, das außenseitig des Batteriegehäuses unter Zwischenlage eines freien Montagespaltes in der Fahrzeugquerrichtung nach außen jeweils mit seitlichen Deformationselementen verlängert. Die seitlichen Deformationselemente können mittelbar oder unmittelbar am Fahrzeugaufbau, insbesondere am Karosserielängsträger oder am Türschweller, montiert sein. Der erfindungsgemäße Crashquerträger ist somit nicht in der Fahrzeugquerrichtung durchgängig gestaltet, sondern vielmehr insgesamt dreiteilig, nämlich aus dem innerhalb des Batteriegehäuses geführten Mittelteil sowie den beiden in der Fahrzeugquerrichtung nach außen in Flucht angeordneten Deformationselementen. Die Deformationselemente sind zudem über einen freien Montagespalt vom batteriegehäuseseitigen Mittelteil des Crashquerträgers beabstandet, um eine einfache Montage der Deformationselemente sowie der Traktionsbatterie am Fahrzeugaufbau zu gewährleisten.

Bei einem Seitencrash wird zunächst der crashzugewandte Längsträger oder Türschweller eingedrückt und das zugeordnete Deformationselement des Crashquerträgers deformiert. Anschließend wird die verbleibende Aufprallenergie über das Mittelteil des Crashquerträgers bis zur crashabgewandten Fahrzeugseite weitergeleitet. Dort kann gegebenenfalls das Mittelteil des Crashquerträgers unter Überbrückung des freien Montagespalts in Kontakt mit dem crashabgewandten Deformationselement treten sowie sich das crashabgewandte Deformationselement verformen, wie auch der crashabgewandte Türschweller oder Fahrzeuglängsträger.

Zur weiteren Erhöhung der Quersteifigkeit kann das Deformationselement unmittelbar an einer Fahrzeug-Hinterachse montiert sein. Die Fahrzeug-Hinterachse kann in der Fahrzeugquerrichtung betrachtet zwei gegenüberliegende Radträger für die jeweiligen Fahrzeug-Hinterräder aufweisen. Jeder der Radträger ist über zumindest einem Lenker an fahrzeugaufbauseitigen Lagerstellen angelenkt. Das Deformationselement des Crashquerträgers kann bevorzugt unmittelbar an der fahrzeugaufbauseitigen Lagerstelle des Lenkers angeordnet sein. Zudem kann sich das in der Traktionsbatterie integrierte Mittelteil des Crashquerträgers in der Fahrzeugquerrichtung, insbesondere in Flucht, zwischen den beiden aufbauseitigen Lagerstellen des Lenkers erstrecken. Auf diese Weise ergibt sich eine im Hinblick auf einen Seitencrash stark verbesserte Quersteifigkeit des Fahrzeuges.

Die fahrzeugaufbauseitige Lagerstelle des Lenkers kann eine ortsfest am Fahrzeugaufbau montierte Lagerkonsole aufweisen, an der der Lenker über ein Drehlager schwenkbar gelagert ist. Das Deformationselement ist dabei insbesondere speziell an der Lagerkonsole montiert. Die Lagerkonsole wird somit nicht nur als Abstützbasis für den Lenker, sondern vielmehr auch für das Deformationselement eingesetzt.

Wie oben erwähnt, erstreckt sich an jeder Fahrzeugseite zumindest ein Lenker zwischen dem Radträger und einer fahrzeugaufbauseitigen Lagerstelle. Dieser Lenker kann Bestandteil eines Mehrlenkerverbandes einer Radaufhängung sein, die zusätzlich noch weitere Lenker aufweist, die zwischen dem Radträger und dem Fahrzeugaufbau, insbesondere einem fahrzeugaufbauseitigen Hilfsrahmen, drehgelenkig gelagert sind.

Am Hilfsrahmen können nicht nur die oben genannten Lenker angelenkt sein. Zusätzlich können am Hilfsrahmen Antriebskomponenten, etwa ein Hinterachs-Differenzial und/oder eine Spurstange gelagert sein. Der Hilfsrahmen kann über Lagerstellen am Fahrzeugaufbau, das heißt an den Karosserie-Längsträgern, montiert sein. Zur Erhöhung seiner Bauteilsteifigkeit kann der Hilfsrahmen in etwa rechteckförmig mit Hilfsrahmen-Längsträgern und Hilfsrahmen-Querträgern aufgebaut sein.

Aufgrund der mehrteiligen Gestaltung des Crashquerträgers, bestehend aus den beiden seitlichen Deformationselementen sowie dem batteriegehäuseseitigen Mittelteil ergibt sich eine hohe Flexibilität beim Zusammenbau des Fahrzeuges. Beispielhaft bilden die beiden Deformationselemente zusammen mit der Hinterachse eine Vormontageeinheit, die unabhängig von dem Batteriegehäuse mit dem darin integrierten Crashquerträger-Mittelteil vorgefertigt wird. Das Batteriegehäuse sowie die Hinterachse können unabhängig voneinander, das heißt an unterschiedlichen Anbindungsstellen, am Fahrzeugaufbau montiert werden.

Die Traktionsbatterie kann eine Hinterschneidung mit einem Freiraum aufweisen. In den Freiraum kann die Hinterachse im Zusammenbauzustand des Fahrzeuges einragen, und zwar so, dass sich die Hinterachse und die Traktionsbatterie in der Fahrzeughochrichtung betrachtet mit einem gewissen Überstand überdecken.

Nachfolgend wird ein Montageablauf beim Zusammenbau der Batterieanordnung sowie der Hinterachse am Fahrzeugaufbau beschrieben, der erst durch die erfindungsgemäße mehrteilige Gestaltung des Crashquerträgers ermöglicht wird. So wird zunächst in einem ersten Montageschritt die Fahrzeughinterachse in einer Vormontageposition auf einem Einfahrrahmen positioniert. Der Einfahrrahmen dient bei der Fahrzeugmontage als Montagehilfe zur Anbindung des Fahrwerks, der Traktionsbatterie sowie der Vorder- und/oder Hinterachse am Fahrzeugaufbau. In einem zweiten Montageschritt wird die Traktionsbatterie in einer Endmontageposition auf dem Einfahrrahmen abgelegt. Anschließend wird in einem dritten Montageschritt die Fahrzeug-Hinterachse von ihrer Vormontageposition in ihre Endmontageposition verlagert. In ihrer Endmontageposition sind die Hinterachse und die Traktionsbatterie zueinander verschachtelt angeordnet, das heißt die Fahrzeug-Hinterachse ragt in die bereits oben erwähnte Hinterschneidung der Traktionsbatterie ein, so dass die Hinterachse mit einem gewissen Übermaß die Traktionsbatterie überdeckt. Die nunmehr jeweils in der Endmontageposition auf dem Einfahrrahmen befindlichen Traktionsbatterie und Fahrzeug-Hinterachse werden anschließend in einen vierten Montageschritt am Fahrzeugaufbau angebunden.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber in beliebiger Kombination miteinander zur Anwendung kommen.

Die Erfindung und ihre vorteilhaften Aus- und Weiterbildungen sowie deren Vorteile werden nachfolgend anhand von Zeichnungen näher erläutert.

Es zeigen:
- Fig. 1: in einer perspektivischen Darstellung von unten den Unterbau eines Fahrzeuges mit daran montierter Traktionsbatterie sowie Fahrzeug-Hinterachse;
- Fig. 2: eine Teilschnittdarstellung entlang der Schnittebene I-I aus der Fig. 1;
- Fig. 3: eine fahrzeugaufbauseitige Lagerstelle eines Lenkers einer Radaufhängung der Fahrzeug-Hinterachse; sowie
- Fig. 4 und 5: jeweils Ansichten, die Montageschritte zur Montage der Batterieanordnung sowie der Fahrzeug-Hinterachse am Fahrzeugaufbau veranschaulichen.

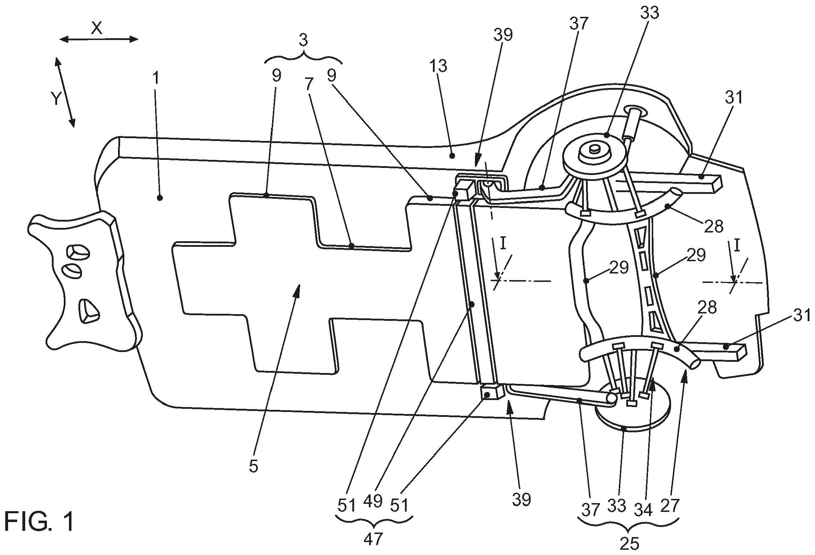

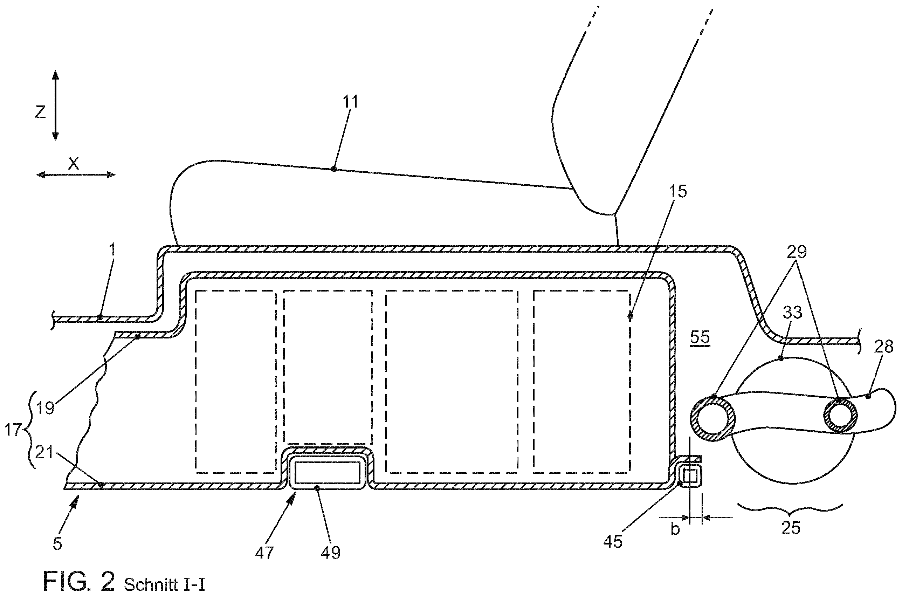

In der Fig. 1 ist in einer perspektivischen Ansicht von unten der Unterbau eines elektrisch betriebenen Fahrzeuges grob vereinfacht dargestellt. Aus Gründen der Übersichtlichkeit sind lediglich die Bauteile angedeutet, die zum Verständnis der Erfindung erforderlich sind. So ist in der Fig. 1 ein, den Fahrzeuginnenraum bodenseitig begrenzendes Fahrzeugbodenblech 1 gezeigt, das eine Aufnahmekontur 3 zur Anordnung einer Traktionsbatterie 5 aufweist. Die Aufnahmekontur 3 im Fahrzeugbodenblech 1 weist einen in den Fahrzeuginnenraum ragenden, in der Fahrzeuglängsrichtung x langgestreckten Mitteltunnel 7 sowie seitliche Ausbuchtungen 9 unterhalb der vorderen Fahrzeugsitze sowie unterhalb einer Rückbank 11 (Fig. 2) auf.

Die seitlichen Ausbuchtungen 9 der Batterie-Aufnahmekontur 3 sind gemäß der Fig. 1 bis an die seitlichen Türschweller 13 herangeführt. Entsprechend erstreckt sich auch die Traktionsbatterie 3 bis in den Nahbereich der seitlichen Türschweller 13.

Die Traktionsbatterie 5 weist Batteriezellen 15 (in der Fig. 2 gestrichelt angedeutet) auf, die in einem Batteriekasten 17 angeordnet sind. Der Batteriekasten 17 besteht aus schalenförmigen Unter- und Oberteilen 19, 21 (Fig. 2), die zum Beispiel an einem randseitig abragenden Verbindungsflansch an Schraubstellen am Fahrzeugboden 1 verschraubt sind.

Am Unterbau des Fahrzeuges ist zudem heckseitig eine Fahrzeug-Hinterachse 25 montiert. Die Fahrzeug-Hinterachse 25 weist einen in Rohrkonstruktion ausgeführten, in etwa rechteckförmigen Hilfsrahmen 27 auf, der durch Hilfsrahmen-Längsträger 28 sowie Hilfsrahmen-Querträger 29 aufgebaut ist. Der Hilfsrahmen 27 ist eine Abstützbasis für Antriebskomponenten, etwa einem Hinterachs-Differenzial. Zudem ist der Hilfsrahmen 27 an nicht näher gezeigten Lagerstellen an den beiden Karosserie-Längsträgern 31 (Fig. 1) montiert. Der Hilfsrahmen 27 ist außerdem in an sich bekannter Weise über einen Mehrlenkerverband 34 mit seitlichen Radträgern 33 für die nicht dargestellten Hinterräder gelenkig verbunden.

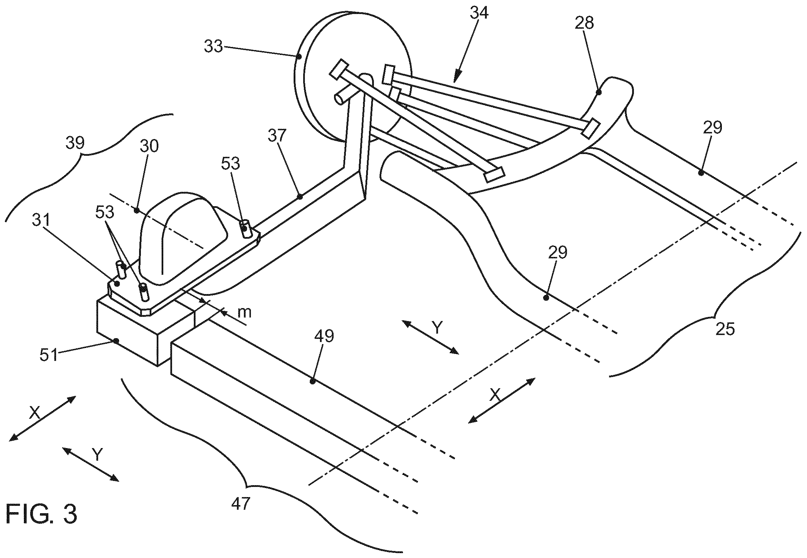

Wie aus der Fig. 1 weiter hervorgeht, weist jeder der Mehrlenkerverbände 34 jeweils einen Längslenker 37 auf, der in der Fahrzeuglängsrichtung x nach vorne abragt. Der jeweilige Längslenker 37 ist einerseits am Radträger 33 und andererseits nicht am Hilfsrahmen 27, sondern unmittelbar am Fahrzeugaufbau angelenkt, und zwar an einer fahrzeugaufbauseitigen Lagerstelle 39. In der Fig. 3 ist die fahrzeugaufbauseitige Lagerstelle 39 des Längslenkers 37 vergrößert dargestellt. Demzufolge besteht die Lagerstelle 39 aus einer am Fahrzeugaufbau montierten Lagerkonsole 41, an der der Längslenker 37 über ein Drehlager 30 schwenkbar gelagert ist. Die Lagerkonsole 41 ist ortsfest am Fahrzeugaufbau montiert.

Im Hinblick auf die Erhöhung einer Quersteifigkeit ist der Batteriekasten 17 der Traktionsbatterie 5 mit einer entsprechenden Versteifungsstruktur versehen. Diese weist gemäß der Fig. 2 beispielhaft Querstreben 45 und einen Crashquerträger 47 auf. Der Crashquerträger 47 erstreckt sich gemäß der Fig. 1 in der Fahrzeugquerrichtung y in Flucht zwischen den beiden aufbauseitigen Lagerstellen 39 der Längslenker 37. Zudem ist der Crashquerträger 47 in der Querrichtung y nicht durchgängig ausgeführt, sondern vielmehr insgesamt dreiteilig, das heißt mit einem im Batteriekasten 17 integrierten Mittelteil 49 sowie jeweils seitlich daran anschließende Deformationselemente 51. Die beiden Deformationselemente 51 sind über einen vorgegebenen Montagespalt m (Fig. 3) vom batterieseitigen Mittelteil 49 beabstandet.

Gemäß der Fig. 3 ist jedes der Deformationselemente 51 nicht unmittelbar am Fahrzeugaufbau montiert, sondern jeweils in Schraubverbindung 53 mit der Lagerkonsole 41 der fahrzeugaufbauseitigen Lagerstelle 39 des Längslenkers 37.

Bei einer Seitenkollision wird zunächst der crashzugewandte Türschweller 13 zusammen mit dem crashzugewandten Deformationselement 51 in Querrichtung y unter Aufbrauch des Montagespaltes m bis in Anlage mit dem batterieseitigen Crashquerträger-Mittelteil 49 deformiert. Anschließend wird Aufprallenergie unter Überbrückung der Batteriezellen 15 bis zur crashabgewandten Seite weitergeleitet. Dort kann gegebenenfalls unter Aufbrauch des Montagespaltes m das Crashquerträger-Mittelteil 49 gegen das crashabgewandte Deformationselement 51 gedrückt werden.

Wie aus der Vorbeschreibung hervorgeht, ist das Crashquerträger-Mittelteil 49 sowie die beiden Deformationselemente 51 jeweils Bestandteil voneinander separater Vormontageeinheiten, das heißt der Traktionsbatterie 5 sowie der Fahrzeug-Hinterachse 25. Auf diese Weise ist ein - im Vergleich zu einer einteiligen Ausführung des Crashquerträgers 47 - wesentlich flexiblerer Montageablauf beim Zusammenbau des Fahrzeuges ermöglicht.

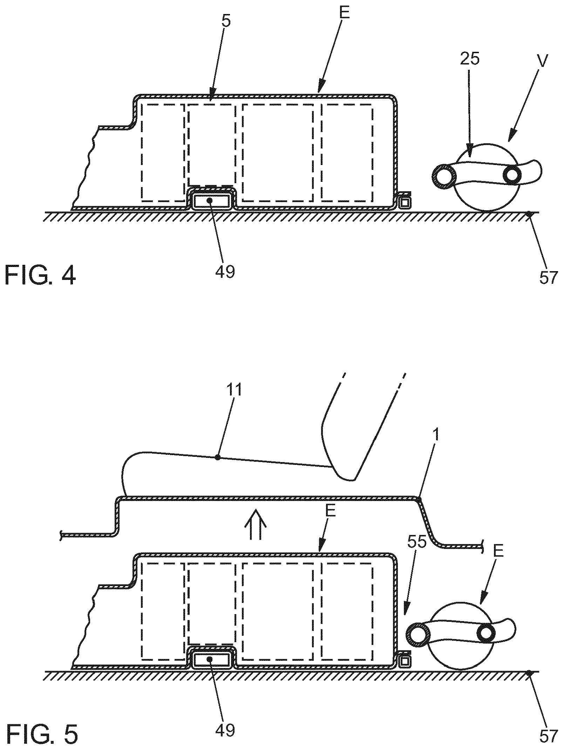

In der Fig. 2 ist der Zusammenbauzustand des Fahrzeuges gezeigt, in dem die Traktionsbatterie 5 und die Hinterachse 25 zueinander verschachtelt sind. Demzufolge weist die Traktionsbatterie 5 an ihrer Rückseite eine Hinterschneidung mit einem Freiraum 55 auf. In den Freiraum 55 ragt ein vorderer Hilfsrahmen-Querträger 29 der Fahrzeug-Hinterachse 25 ein, und zwar mit einem Überstand b (Fig. 2). Dadurch ergibt sich ein packageoptimierter Zusammenbau, der die nachfolgend anhand der Fig. 4 und 5 gezeigten Montageschritte erforderlich macht. So wird in einem ersten Montageschritt (Fig. 4) zunächst die Fahrzeug-Hinterachse 25 in einer Vormontageposition V auf einen Einfahrrahmen 57 abgelegt, der als Montagehilfsmittel verwendet wird. In einem zweiten Montageschritt (Fig. 5) wird die Traktionsbatterie 5 bereits in ihrer Endmontageposition E auf den Einfahrrahmen 57 abgelegt. Anschließend wird in einem dritten Montageschritt (Fig. 5) die Fahrzeug-Hinterachse 25 von ihrer Vormontageposition V in ihre Endmontageposition E verlagert. In ihrer Endmontageposition E ist die Fahrzeug-Hinterachse 25 mit dem Überstand b in den von der Traktionsbatterie 5 bereitgestellten Freiraum 55 eingeschoben.
Anschließend werden in einem vierten Montageschritt die jeweils in Endmontageposition befindliche Traktionsbatterie 5 sowie die Fahrzeug-Hinterachse 25 am Fahrzeugaufbau angebunden.

## Patentansprüche

1. Batterieanordnung für ein zweispuriges Fahrzeug, mit einer Traktionsbatterie (5) mit einem Batteriegehäuse (17), in dem crahsensible Batteriezellen (15) und zumindest ein in der Fahrzeugquerrichtung (y) verlaufender Crashquerträger (47) angeordnet sind, mit dem im Seitencrashfall die eingeleitete Aufprallkraft unter Überbrückung der Batteriezellen (15) zur crashabgewandten Fahrzeugseite übertragbar ist, **dadurch gekennzeichnet, dass** der Crashquerträger (47) zumindest dreiteilig mit einem batterieintegrierten Mittelteil (49) ausgebildet ist, das außenseitig des Batteriegehäuses (17) unter Zwischenlage eines freien Montagespalts (m) in der Fahrzeugquerrichtung (y) nach außen in Flucht jeweils mit einem Deformationselement (51) verlängert ist, und dass das Deformationselement (51) mittelbar oder unmittelbar an einem Karosserieteil, insbesondere einem Karosserielängsträger (31) oder einem Türschweller (13) montiert ist.

2. Batterieanordnung nach Anspruch 1, **dadurch gekennzeichnet, dass** das Deformationselement (51) an einer Fahrzeug-Hinterachse (25) montiert ist, und dass insbesondere die Fahrzeug-Hinterachse (25) in der Fahrzeugquerrichtung (y) zwei gegenüberliegende Radträger (33) für die Fahrzeug-Hinterräder (35) aufweist, der über zumindest einen Lenker (37) an fahrzeugaufbauseitigen Lagerstellen (39) angelenkt sind, und dass insbesondere das Deformationselement (51) des Crashquerträgers (47) an der fahrzeugaufbauseitigen Lagerstelle (39) des Lenkers (37) angeordnet ist.

3. Batterieanordnung nach Anspruch 2, **dadurch gekennzeichnet, dass** der Crashquerträger (47) der Traktionsbatterie (5) sich in der Fahrzeugquerrichtung (y) insbesondere in Flucht zwischen den aufbauseitigen Lagerstellen 839) erstreckt.

4. Batterieanordnung nach Anspruch 2 oder 3, **dadurch gekennzeichnet, dass** die fahrzeugaufbauseitige Lagerstelle (39) des Lenkers (37) eine ortsfest am Fahrzeugaufbau montierte Lagerkonsole (41) aufweist, an der der Lenker (37) über ein Drehlager (30) schwenkbar gelagert ist, und dass insbesondere das Deformationselement (51) auf der Lagerkonsole (41) montiert ist.

5. Batterieanordnung nach Anspruch 2, 3 oder 4, **dadurch gekennzeichnet, dass** der Lenker (37) Bestandteil eines Mehrlenkerverbands (34) einer Radaufhängung ist, der eine Anzahl weiterer Lenker aufweist, die zwischen dem Radträger (33) und einem Hilfsrahmen (27) drehgelenkig gelagert sind.

6. Batterieanordnung nach Anspruch 5, **dadurch gekennzeichnet, dass** der Hilfsrahmen (27) über Lagerstellen am Fahrzeugaufbau, insbesondere an den Karosserie-Längsträgern (31), montiert ist, und/oder dass der Hilfsrahmen (27) in etwa rechteckförmig mit Hilfsrahmen-Längsträgern (28) und Hilfsrahmen-Querträgern (29) aufgebaut ist.

7. Batterieanordnung nach einem der Ansprüche 2 bis 6, **dadurch gekennzeichnet, dass** das Batteriegehäuse (17) mit dem damit integrierten Crashquerträger (47) und die Hinterachse (25) mit den daran montierten Deformationselementen (51) zwei voneinander separate Vormontageeinheiten sind, die unabhängig voneinander, das heißt an unterschiedlichen Anbindungsstellen, am Fahrzeugaufbau montierbar sind.

8. Batterieanordnung nach einem der Ansprüche 2 bis 7, **dadurch gekennzeichnet, dass** die Traktionsbatterie (5) eine Hinterschneidung mit einem Freiraum (55) aufweist, in den die Hinterachse (25) einragt, und zwar so, dass sich die Hinterachse (25) und die Traktionsbatterie (5) in der Fahrzeughochrichtung (z) betrachtet mit einem Überstand (b) überdecken.

9. Fahrzeug mit einer Batterieanordnung nach einem der vorhergehenden Ansprüche.

10. Verfahren zur Montage eines Fahrzeugs mit einer Batterieanordnung nach einem der Ansprüche 1 bis 8, in welchem Verfahren insbesondere in einem ersten Montageschritt die Fahrzeug-Hinterachse (25) in einer Vormontageposition (V) auf einen Einfahrrahmen (57) abgelegt wird, in einem zweiten Montageschritt die Traktionsbatterie (5) in einer Endmontageposition (E) auf den Einfahrrahmen (57) abgelegt wird, in einem dritten Montageschritt die Fahrzeug-Hinterachse (25) von ihrer Vormontageposition (V) in ihre Endmontageposition (E) verlagert wird, in der die Fahrzeug-Hinterachse (25) betrachtet in einen Freiraum (55) einer Hinterschneidung der Traktionsbatterie (5) eingeschoben ist, in der die Fahrzeug-Hinterachse (25) und die Traktionsbatterie (5) in der Hochrichtung (z) mit einem Übermaß (b) einander überdecken, und in einem vierten Montageschritt die jeweils in Endmontageposition (E) befindliche Traktionsbatterie (5) und Fahrzeug-Hinterachse (25) am Fahrzeugaufbau angebunden werden.

## Claims

1. Battery arrangement for a two-track vehicle, having a traction battery (5) with a battery housing (17), in which crash-sensitive battery cells (15) and at least one crash crossmember (47) which runs in the vehicle transverse direction (y) are arranged, by way of which crash crossmember (47), in the case of a side impact, the impact force which is introduced can be transmitted to the vehicle side which faces away from the crash, bridging the battery cells (15), **characterized in that** the crash crossmember (47) is of at least three-piece configuration with a battery-integrated centre part (49) which is lengthened on the outer side of the battery housing (17), with a free mounting gap (m) positioned in between, outwards in the vehicle transverse direction (y) in a flush manner in each case with a deformation element (51), and **in that** the deformation element (51) is mounted indirectly or directly on a chassis part, in particular a chassis longitudinal carrier (31) or door sill (13).

2. Battery arrangement according to Claim 1, **characterized in that** the deformation element (51) is mounted on a vehicle rear axle (25), and **in that**, in particular, the vehicle rear axle (25) has, in the vehicle transverse direction (y), two wheel supports (33) on opposite sides for the vehicle rear wheels (35), which wheel supports (33) are articulated via at least one link (37) on vehicle body-side bearing points (39), and **in that**, in particular, the deformation element (51) of the crash crossmember (47) is arranged on the vehicle body-side bearing point (39) of the link (37).

3. Battery arrangement according to Claim 2, **characterized in that** the crash crossmember (47) of the traction battery (5) extends in the vehicle transverse direction (y), in particular in a flush manner between the body-side bearing points 839).

4. Battery arrangement according to Claim 2 or 3, **characterized in that** the vehicle body-side bearing point (39) of the link (37) has a bearing bracket (41) which is mounted on the vehicle body in a stationary manner and on which the link (37) is mounted pivotably via a rotary bearing (30), and **in that**, in particular, the deformation element (51) is mounted on the bearing bracket (41).

5. Battery arrangement according to Claim 2, 3 or 4, **characterized in that** the link (37) is a constituent part of a multi-link assembly (34) of a wheel suspension system, which multi-link assembly (34) has a number of further links which are mounted in a rotationally articulated manner between the wheel support (33) and a subframe (27).

6. Battery arrangement according to Claim 5, **characterized in that** the subframe (27) is mounted via bearing points on the vehicle body, in particular on the chassis longitudinal carriers (31), and/or **in that** the subframe (27) is of approximately rectangular construction with subframe longitudinal carriers (28) and subframe crossmembers (29).

7. Battery arrangement according to one of Claims 2 to 6, **characterized in that** the battery housing (17), with the crash crossmember (47) which is integrated with it, and the rear axle (25), with the deformation elements (51) which are mounted on it, are two preassembled units which are separate from one another and can be mounted on the vehicle body independently of one another, that is to say at different attachment locations.

8. Battery arrangement according to one of Claims 2 to 7, **characterized in that** the traction battery (5) has an undercut with a clearance (55), into which the rear axle (25) protrudes, to be precise in such a way that the rear axle (25) and the traction battery (5) overlap with an overhang (b) as viewed in the vehicle vertical direction (z).

9. Vehicle having a battery arrangement according to one of the preceding claims.

10. Method for assembling a vehicle with a battery arrangement according to one of Claims 1 to 8, in which method, in particular in a first assembly step, the vehicle rear axle (25) is deposited onto a roll-in frame (57) in a preassembly position (V), the traction battery (5) is deposited, in a second assembly step, onto the roll-in frame (57) in a final assembly position (E), the vehicle rear axle (25) is moved, in a third assembly step, from its preassembly position (V) into its final assembly position (E), in which the vehicle rear axle (25) is pushed viewed into a clearance (55) of an undercut of the traction battery (5), in which undercut the vehicle rear axle (25) and the traction battery (5) overlap one another with an overhang (b) in the vertical direction (z), and the traction battery (5) and the vehicle rear axle (25) which are situated in each case in the final assembly position (E) are attached to the vehicle body in a fourth assembly step.

## Revendications

1. Agencement de batterie pour un véhicule à deux lignes de roues, comportant une batterie de traction (5) et un carter de batterie (17) dans lequel sont disposés des éléments de batterie (15) sensibles aux collisions et au moins une traverse de sécurité (47) s'étendant dans la direction transversale (y) du véhicule, avec laquelle, en cas de collision latérale, la force de choc générée peut être transmise vers le côté du véhicule opposé à l'impact en contournant les éléments de batterie (15), **caractérisé en ce que** la traverse de sécurité (47) est réalisée en au moins trois parties avec une partie centrale (49) intégrée à la batterie, qui est prolongée à l'extérieur du carter de batterie (17) vers l'extérieur en alignement dans la direction transversale du véhicule (y) par un élément de déformation (51) respectif en interposant un espace de montage libre (m), et **en ce que** l'élément de déformation (51) est monté directement ou indirectement sur une partie de la carrosserie, en particulier sur un longeron (31) de la carrosserie ou sur un seuil de porte (13).

2. Agencement de batterie selon la revendication 1, **caractérisé en ce que** l'élément de déformation (51) est monté sur un essieu arrière (25) du véhicule, et **en ce que** notamment l'essieu arrière (25) du véhicule présente, dans la direction transversale du véhicule (y), deux supports de roue opposés (33) pour les roues arrière (35) du véhicule, qui sont articulés par le biais d'au moins un bras oscillant (37) à un support de palier (39) du côté de la caisse du véhicule, et **en ce que** l'élément de déformation (51) de la traverse de sécurité (47) est notamment disposé au niveau du support de palier (39) du bras oscillant (37) du côté de la caisse du véhicule.

3. Agencement de batterie selon la revendication 2, **caractérisé en ce que** la traverse de sécurité (47) de la batterie de traction (5) s'étend dans la direction transversale du véhicule (y) notamment en alignement entre les supports de palier 839) du côté de la caisse.

4. Agencement de batterie selon la revendication 2 ou 3, **caractérisé en ce que** le support de palier (39) du bras oscillant (37) du côté de la caisse du véhicule présente une console de palier (41) montée fixement sur la caisse du véhicule, au niveau de laquelle le bras oscillant (37) est supporté de manière pivotante par le biais d'un palier pivotant (30), et **en ce que** l'élément de déformation (51) est notamment monté sur la console de palier (41).

5. Agencement de batterie selon la revendication 2, 3 ou 4, **caractérisé en ce que** le bras oscillant (37) fait partie d'un assemblage à bras multiples (34) d'une suspension de roue, qui présente une pluralité de bras oscillants supplémentaires qui sont supportés de manière articulée en rotation entre le support de roue (33) et un cadre auxiliaire (27).

6. Agencement de batterie selon la revendication 5, **caractérisé en ce que** le cadre auxiliaire (27) est monté par le biais de supports de palier sur la caisse du véhicule, en particulier sur les longerons (31) de la carrosserie, et/ou **en ce que** le cadre auxiliaire (27) est construit approximativement sous forme rectangulaire avec des longerons de cadre auxiliaire (28) et des traverses de cadre auxiliaire (29).

7. Agencement de batterie selon l'une quelconque des revendications 2 à 6, **caractérisé en ce que** le carter de batterie (17) avec la traverse de sécurité (47) intégrée à celui-ci et l'essieu arrière (25) avec les éléments de déformation (51) montés sur celui-ci sont deux unités de prémontage séparées l'une de l'autre qui peuvent être montées indépendamment l'une de l'autre, c'est-à-dire au niveau de zones de raccordement différentes sur la caisse du véhicule.

8. Agencement de batterie selon l'une quelconque des revendications 2 à 7, **caractérisé en ce que** la batterie de traction (5) présente une contre-dépouille avec un espace libre (55) dans lequel pénètre l'essieu arrière (25) de telle sorte que l'essieu arrière (25) et la batterie de traction (5) se recouvrent avec un dépassement (b), vu dans la direction verticale du véhicule (z).

9. Véhicule comprenant un agencement de batterie selon l'une quelconque des revendications précédentes.

10. Procédé de montage d'un véhicule avec un agencement de batterie selon l'une quelconque des revendications 1 à 8, dans lequel procédé, notamment dans une première étape de montage, l'essieu arrière du véhicule (25) est posé dans une position de prémontage (V) sur un cadre d'introduction (57), dans une deuxième étape de montage, la batterie de traction (5) est déposée dans une position de montage finale (E) sur le cadre d'introduction (57), dans une troisième étape de montage, l'essieu arrière du véhicule (25) est déplacé de sa position de prémontage (V) dans sa position de montage finale (E) dans laquelle l'essieu arrière du véhicule (25), considéré est introduit dans un espace libre (55) d'une contre-dépouille de la batterie de traction (5), dans laquelle l'essieu arrière du véhicule (25) et la batterie de traction (5) se recouvrent mutuellement avec un dépassement (b) dans la direction verticale (z), et dans une quatrième étape de montage, la batterie de traction (5) et l'essieu arrière du véhicule (25) se trouvant chacun dans leur position de montage finale (E) sont raccordés à la caisse du véhicule.
